# FASCICULE DE BREVET EUROPEEN

(11) **EP 1 589 833 B1**
(45) Date de publication et mention de la délivrance du brevet: **16.05.2007**
(21) Numéro de dépôt: 03816147.7
(22) Date de dépôt: 23.12.2003
(51) Int. Cl.: A23L 1/232

(54) **PROCEDE DE PREPARATION DE DENREES ALIMENTAIRES FUMEES ET DENREES ALIMENTAIRES AINSI OBTENUES**
Verfahren zur Herstellung von geräucherten Nahrungsmitteln und daraus hergestellte Nahrungsmittel
METHOD OF PREPARING SMOKED FOOD PRODUCTS AND FOOD PRODUCTS THUS OBTAINED

(30) Priorité: 29.01.2003 FR 0301002
(43) Date de publication de la demande: 02.11.2005
(73) Titulaire: Sofral Société Francaise d'Alimentation, S.A., 67400 Illkirch Graffenstaden (FR)
(72) Inventeur: HOLZSCHUH, Pierre, D-77694 Kehl (DE); BÜCH, Georg, D-77746 Schütterwald (DE); WEILAND, Jean-Jacques, F-67330 Hattmatt (FR)
(74) Mandataire: Nuss, Pierre
(86) Numéro de dépôt international: PCT/FR2003/003884
(87) Numéro de publication internationale: WO 2004/077965

(56) Documents cités:
- US-A- 4 359 481
- US-A- 4 994 297

## Description

La présente invention concerne le domaine de l'agro-alimentaire et plus précisément celui du traitement de denrées alimentaires permettant d'améliorer essentiellement certaines de leur qualités organoleptiques (aspect, goût...) ainsi que leur conservabilité (augmentation de la durée de conservation). Elle concerne plus particulièrement la préparation par fumage et coloration de produits alimentaires fumés tels que des poissons, viandes, charcuteries et analogues.

La fumaison est, avec la salaison, une des techniques de conservation des aliments les plus anciennes. En effet, elle vit le jour peu après la maîtrise du feu par l'homme. A l'origine, le but recherché était une augmentation de la durée de conservation du produit traité. Par la suite, c'est principalement la recherche d'une qualité gustative et accessoirement celle d'un mode de présentation du produit, qui ont prévalu.

Des procédés archaïques ont été utilisés jusqu'au siècle dernier mais depuis, les techniques se sont modernisées et diversifiées, les méthodes de fumaison traditionnelles ne représentant plus qu'un petit volume à l'échelle mondiale.

Ainsi, de nouveaux produits ont, par exemple, vu le jour aux Etats-Unis à partir du XIX^{ième} siècle. Ces produits, encore appelés fumées liquides ou compositions de fumées liquides, ont été développés afin de remplacer le contact direct de l'aliment avec la fumée et sont obtenus en condensant les fumées gazeuses obtenues par pyrolyse d'une matière organique végétale, le plus souvent du bois, sous forme liquide.

Il est en effet connu que la pyrolyse de matières végétales, en particulier la pyrolyse de particules ou de copeaux de bois, induit la formation de molécules aromatiques lors des processus de décomposition thermique de ladite matière végétale. La nature chimique des arômes obtenus dépend essentiellement des paramètres de traitement, tels que la température de pyrolyse, le temps de séjour ou encore l'atmosphère gazeuse utilisés au cours de la réaction de pyrolyse.

Par ailleurs, la majeure partie des composés chimiques constituant la fumée obtenue lors de la pyrolyse est liquide à température ambiante. En raison de multiples avantages, ces produits ont tendance à constituer peu à peu les nouveaux standards de production des aliments fumés. Ainsi les fumées liquides sont notamment utilisées de manière avantageuse lors de la fumaison de jambons, saucisses, poissons, poitrines etc., un goût fumé ainsi qu'une coloration brune typique, similaires à ceux observés lors de fumaisons traditionnelles étant alors obtenus.

Le principal but d'une fumaison de produits alimentaires est donc actuellement d'obtenir un goût et une coloration typiques du produit et, de préférence, une amélioration de la conservabilité.

Les fumées liquides constituent des mélanges complexes pouvant comprendre plus de 1000 composés chimiques différents, dont 400 ont été clairement identifiés. Ces composés appartiennent généralement à des familles chimiques dont les principales sont les acides carboxyliques, les carbonyles, les phénols et les hydrocarbures aromatiques polycycliques.

A titre d'exemple d'une composition typique de fumée liquide on peut citer le brevet US 3 106 473 et le brevet US 4 359 481.

Schématiquement, on admet que les acides organiques ont une action sur la conservabilité des denrées fumées, que les phénols ont une action sur le goût des denrées fumées et que les composés carbonylés sont à l'origine de la couleur des produits fumés. Toutefois, en raison de l'extrême complexité chimique des fumées liquides, des synergies entre les différents composés chimiques sont plus que probables.

Un certain nombre de composés indésirables sont également produits lors des procédés de pyrolyse. Les hydrocarbures aromatiques polycycliques (HAP) sont des composés toxiques produits lors de pyrolyses à haute température de matières organiques. Ces composés doivent être éliminés des fumées liquides ou leur teneur doit, pour le moins, être minimisée. Les normes actuellement en vigueur en Europe imposent un taux maximal de 10 ppb de benzo[a]pyrène et de 20 ppb de benzoanthracène dans les fumées liquides.

Le contrôle des taux d'hydrocarbures aromatiques polycycliques dans les fumées liquides permet ainsi de minimiser les risques sanitaires par rapport aux méthodes traditionnelles de fumaison.

Pour la production de fumées aromatiques, divers réacteurs de pyrolyse ont été développés au cours de ces dernières décennies.

Un nouveau type de réacteur décrit dans la demande de brevet français n° 02 08495 au nom de la demanderesse, du type dit « réacteur élévateur vibré » comprend essentiellement une enceinte chauffable sensiblement hermétique contenant au moins un élément tubulaire ascendant mis en vibration et recevant une matière organique à pyrolyser, pour la production de fumées destinées à une fumaison de denrées alimentaires, pour la production de fumées liquides et pour la production de charbon de bois.

Un autre type de réacteur adapté est décrit dans la demande de brevet français n° 03 00925 du 28.01.2003 au nom de la demanderesse et comprend une enceinte chauffable contenant au moins une vis sans fin rotative chauffée par effet Joule recevant la matière organique à pyrolyser.

De tels réacteurs permettent l'obtention de fumées destinées à une fumaison de denrées alimentaires qui soient techniquement satisfaisantes et qui répondent aux normes sanitaires applicables, c'est-à-dire qu'elles présentent une teneur maximale en volume en benzo[a]pyrène de 10 g/m³ et de 20 g/m³ en volume de benzoanthracène, soit, une fois condensées en fumées liquides, une teneur en volume en benzo[a]pyrène d'au plus 10 ppb et une teneur en volume en benzoanthracène d'au plus 20 ppb.

Toutefois, tous les procédés de traitement de produits alimentaires actuellement mis en oeuvre présentent l'inconvénient de ne pas permettre une préparation sélective du produit à traiter en fonction de ses propriétés organoleptiques de départ.

Ainsi, par exemple, il n'est actuellement pas possible de renforcer de manière indépendante, l'intensité du goût, de la couleur et la durée de conservation d'un produit alimentaire du type susvisé sans en affecter les autres propriétés.

En particulier, il n'existe pas, à l'heure actuelle de procédé de fumage permettant de modifier la couleur d'un produit alimentaire à traiter sans également en modifier le goût. Le renforcement de la couleur que l'on obtient par fumage dudit produit s'accompagne également d'une augmentation de l'intensité du goût qui peut finalement conduire à une dénaturation rendant le produit traité non satisfaisant voire impropre à la consommation.

La présente invention a pour but de pallier au moins certains des inconvénients précités.

A cette fin, elle a pour objet un procédé de préparation d'un produit alimentaire, caractérisé en ce qu'il comprend essentiellement au moins une étape d'aromatisation consistant à donner un goût fumé audit produit alimentaire et au moins une étape de coloration, indépendante de ladite étape d'aromatisation, consistant à donner une couleur supplémentaire ou une nuance particulière supplémentaire audit produit alimentaire, en particulier en renforçant la couleur précédemment obtenue.

Elle a également pour objet une denrée alimentaire obtenue par la mise en oeuvre du procédé selon l'invention ainsi qu'un agent de conservation pour produit alimentaire pour la mise en oeuvre dudit procédé selon l'invention.

Enfin, elle a encore pour objet, l'utilisation d'une composition contenant au moins une substance carbonylée autre que l'hydroxyacétaldéhyde et les sucres réducteurs pour la coloration par réactions de Maillard d'un produit alimentaire.

L'invention sera mieux comprise grâce à la description ci-après, qui se rapporte à des modes de réalisation préférés, donnés à titre d'exemples non limitatifs.

Selon un premier aspect, le procédé selon l'invention est caractérisé en ce qu'il comprend en outre une étape de conservation, indépendante desdites étapes d'aromatisation et de coloration consistant à mettre en contact le produit alimentaire à préparer ou déjà partiellement préparé avec au moins une composition de conservation obtenue par pyrolyse d'au moins une matière végétale et/ou comprenant au moins un composé choisi dans le groupe formé par les conservateurs de n° CE choisis parmi la liste suivante : E 200, E 202, E 203, E 210, E 211, E 212, E 213, E 235, E 249, E 250, E 251, E 252, E 260, E 262, E 263, E 270, E 300, E 301, E 325, E 326, E 330 et E 334.

Par ailleurs, il a été noté que la présence d'acides organiques, émis lors du procédé de fumage, permet d'augmenter la durée de conservation des denrées alimentaires.

Ainsi, de manière avantageuse, l'étape de conservation se fait en appliquant audit produit alimentaire une fumée obtenue par pyrolyse d'au moins une matière organique végétale à une température comprise entre 150 °C et 300 °C, de préférence entre 200 °C et 280 °C, éventuellement suivie d'une étape supplémentaire de purification des fumées produites, ce afin d'en réduire à une concentration acceptable la teneur en composés indésirables du type hydrocarbures aromatiques polycycliques (HAP), composés phénoliques et analogues.

Selon une variante, l'étape de conservation se fait en appliquant audit produit alimentaire une fumée liquide obtenue par pyrolyse d'au moins une matière organique végétale à une température comprise entre 150 °C et 300 °C, de préférence entre 200 °C et 280 °C, éventuellement suivie d'une étape supplémentaire de purification des fumées produites, ce afin d'en réduire à une concentration acceptable la teneur en composés indésirables du type hydrocarbures aromatiques polycycliques (HAP), composés phénoliques et analogues, lesdites fumées produites, éventuellement purifiées, étant condensées sous forme liquide une fois produites dans un dispositif de condensation adapté.

Selon une autre caractéristique importante l'étape d'aromatisation se fait en appliquant audit produit alimentaire, une fumée obtenue par pyrolyse d'au moins une matière organique végétale à une température comprise entre 200 °C et 800 °C, de préférence entre 300 °C et 400 °C, éventuellement suivie d'une étape supplémentaire de purification des fumées produites lorsque ladite température de pyrolyse est comprise entre 400 °C et 800 °C, ce afin de réduire à une concentration acceptable la teneur en composés indésirables du type hydrocarbures aromatiques polycycliques (HAP).

A ce sujet il convient de rappeler que le goût fumé est obtenu par l'absorption de molécules aromatiques provenant de la fumée par la denrée alimentaire. Les molécules aromatiques sont principalement composées de phénols et d'hétérocycles tels que les furanes.

Dans un autre mode de réalisation, le procédé selon la présente invention est caractérisé en ce que l'étape d'aromatisation se fait en appliquant audit produit alimentaire, une fumée liquide obtenue par pyrolyse d'au moins une matière organique végétale à une température comprise entre 200 °C et 800 °C, de préférence entre 300 °C et 400 °C, éventuellement suivie d'une étape supplémentaire de purification des fumées produites lorsque ladite température de pyrolyse est comprise entre 400 °C et 800 °C, ce afin de réduire à une concentration acceptable la teneur en composés indésirables du type hydrocarbures aromatiques polycycliques (HAP), les fumées produites, éventuellement purifiées, étant condensées sous forme liquide une fois produites dans un dispositif de condensation adapté.

De manière préférée, la pyrolyse se fait sous contrôle précis, à 0,1 % près et/ou à un degré Celsius près de la teneur en volume en oxygène lors de ladite pyrolyse, respectivement de la température de pyrolyse.

Selon un autre aspect, la matière organique pyrolysée est essentiellement constituée de fibres ou copeaux d'au moins une substance végétale telle que le bois, la cellulose ou de tout autre mono ou polysaccharide ou complexe ligno-cellulosique.

Avantageusement, la pyrolyse se déroule dans un réacteur élévateur vibré du type comprenant essentiellement une enceinte chauffable sensiblement hermétique contenant au moins un élément tubulaire ascendant mis en vibration et recevant une matière organique à pyrolyser, pour la production de fumées ou de fumées liquides destinées à la fumaison de denrées alimentaires.

Selon une autre variante également avantageuse, la pyrolyse se découle dans un réacteur comprenant essentiellement une enceinte chauffable sensiblement hermétique contenant au moins une vis sans fin rotative chauffée par effet Joule, ladite au moins une vis recevant une matière organique à pyrolyser, pour la production de fumées destinées à une fumaison de denrées alimentaires.

Selon une autre caractéristique avantageuse, le procédé selon l'invention est encore caractérisé en ce que les fumées liquides utilisées présentent, une fois condensées, une teneur en volume en benzo[a]pyrène d'au plus 10 ppb et une teneur en volume en benzoanthracène d'au plus 20 ppb.

La coloration du produit fumé est quant à elle principalement due à des réactions de dites de Maillard entre les fonctions carbonyles présents dans lesdites fumées et les protéines du produit alimentaire à fumer.

Dans un premier mode de réalisation, l'étape de coloration est réalisée en effectuant des réactions de Maillard sur le produit alimentaire à préparer ou déjà partiellement préparé.

Selon un autre mode de réalisation, l'étape de coloration se fait en mettant en contact le produit alimentaire à colorer avec une composition contenant au moins une substance carbonylée autre que l'hydroxyacétaldéhyde et les sucres réducteurs.

De préférence, l'étape de coloration se fait en mettant en contact le produit alimentaire à colorer avec une composition contenant au moins une substance choisie dans le groupe formé par l'hexadécanal, le glutaraldéhyde, le 2-éthylhexanal, le farnesal, le 2-buténal, le 2-méthylhexanal, le glyoxal, le 2-méthylpentanal, le néral, le tridécanal, le 2-hexanal et le 2-propénal.

Alternativement, l'étape de coloration se fait en mettant en contact le produit alimentaire à colorer avec une composition aminée contenant au moins un acide aminé.

Selon une autre caractéristique, l'étape de coloration se fait en mettant en contact le produit alimentaire à colorer avec au moins une composition colorante comprenant au moins un colorant choisi dans le groupe formé par le carmin, le caramel, le paprika, le roucou, le santal et par les colorants de n° CE choisis parmi la liste suivante : E 100, E 101, E 102, E 104, E 110, E 120, E 122, E 123, E 124, E 127, E 128, E 129, E 131, E 132, E 133, E 140, E 141, E 142, E 150a, E 150b, E 150c, E 150d, E 151, E 153, E 154, E 155, E 160a, E 160b, E 160c, E 160d, E 160e, E 160f, E 161b, E 161g, E 162, E 163, E 170, E 171, E 172, E 173, E 174, E 175 et E 180.

De manière particulièrement préférée, le procédé selon l'invention est caractérisé en ce qu'une, plusieurs ou toutes les étapes parmi celles d'aromatisation, de coloration et de conservation sont réalisées par pulvérisation indépendante de compositions liquides prêtes à l'emploi obtenues à partir de la ou des compositions d'aromatisation, de coloration et de conservation sur le produit alimentaire à préparer ou déjà partiellement préparé.

De façon avantageuse, une, plusieurs ou toutes les étapes parmi celles d'aromatisation et de conservation sont réalisées par fumage du produit alimentaire à préparer ou déjà partiellement préparé.

La présente invention a également pour objet une denrée alimentaire obtenue par la mise en oeuvre du procédé selon l'invention ainsi qu'un agent de conservation pour produit alimentaire pour la mise en oeuvre dudit procédé selon l'invention caractérisé en ce qu'il consiste en une fumée obtenue par pyrolyse d'au moins une matière organique à une température comprise entre 150 °C et 300 °C, de préférence entre 200 °C et 280 °C, éventuellement suivie d'une étape supplémentaire de purification desdites fumées, ce afin d'en réduire à une concentration acceptable la teneur en composés indésirables du type hydrocarbures aromatiques polycycliques (HAP), composés phénoliques et analogues.

De manière préférée, l'agent de conservation pour produit alimentaire pour la mise en oeuvre du procédé selon l'invention est caractérisé en ce qu'il consiste en une fumée liquide obtenue par pyrolyse d'au moins une matière organique à une température comprise entre 150 °C et 300 °C, de préférence entre 200 °C et 280 °C, éventuellement suivie d'une étape supplémentaire de purification des fumées produites, ce afin d'en réduire à une concentration acceptable la teneur en composés indésirables du type hydrocarbures aromatiques polycycliques (HAP), composés phénoliques et analogues, lesdites fumées produites, éventuellement purifiées, étant condensées sous forme liquide une fois produites dans un dispositif de condensation adapté.

Avantageusement, l'agent de conservation conforme à la présente invention est caractérisé en ce qu'il présente une teneur en acides carboxyliques issus de la pyrolyse compris en poids entre 1 % et 50 %.

Enfin, elle a encore pour objet, l'utilisation d'une composition contenant au moins une substance carbonylée autre que l'hydroxyacétaldéhyde et les sucres réducteurs pour la coloration par réactions de Maillard d'un produit alimentaire. Cette utilisation est caractérisée en ce que la composition contient au moins une substance choisie dans le groupe formé par l'hexadécanal, le glutaraldéhyde, le 2-éthylhexanal, le farnesal, le 2-buténal, le 2-méthylhexanal, le glyoxal, le 2-méthylpentanal, le néral, le tridécanal, le 2-hexanal et le 2-propénal.

Comme expliqué ci-dessus, le procédé de la présente invention permet la production de denrées alimentaires fumées présentant un profil aromatique identique ou quasi-identique à celui obtenu par des fumages traditionnels ainsi qu'une coloration intense et une bonne conservabilité du produit fumé.

La présente invention permet également de proposer un procédé de production de denrées alimentaires fumées dont l'intensité du goût, la durée de conservation ainsi que l'intensité de la coloration peuvent être librement et indépendamment déterminées par l'utilisateur de la présente invention.

Comme expliqué ci-dessus, la fumée liquide aromatisante utilisée dans le cadre de la présente invention est composée essentiellement de phénols et d'hétérocycles tels que les furanes. Le profil aromatique de cette fumée liquide est identique ou quasi-identique à celui obtenu par des méthodes de fumaisons traditionnelles. Ceci est rendu possible notamment par un contrôle strict des paramètres de pyrolyse du bois, tels que la température, le taux d'oxygène, etc.

Un tel procédé de production d'une fumée liquide est décrit dans les demandes françaises n° 02 08495 du 05.07.2002 et n° 03 00925 du 28.01.2003 au nom de la demanderesse.

La fumée (éventuellement liquide) à fort pouvoir de coloration est composée essentiellement de carbonyles aptes à initier lesdites réactions de Maillard avec les protéines des aliments. Elle peut également contenir des acides aminés ou des protéines afin d'accélérer et d'intensifier lesdites réactions de Maillard. De telles solutions sont, par exemple, obtenues par fractionnement ou distillation de fumées, pyrolyse de matière végétale ou ajout de composés carbonylés naturels ou synthétiques.

Comme évoqué plus haut, la présente invention prévoit également l'utilisation de colorants alimentaires naturels ou synthétiques (par exemple le carmin, le caramel, le paprika, le rocou, le E 124 ...) afin de renforcer, de modifier ou d'ajuster la couleur du produit à fumer.

L'agent de conservation (par exemple une solution liquide à fort pouvoir de conservation) contient essentiellement un ou plusieurs acides carboxyliques tels que l'acide acétique, formique, propanoïque, butanoïque, maléique etc... Ces solutions sont obtenues par fractionnement ou distillation des fumées, par pyrolyse basse température de matières végétales ou encore par ajout de composés naturels ou synthétiques.

La pyrolyse spécifique à basse température (150 °C - 300 °C) conforme à l'invention de matières végétales est particulièrement avantageuse pour la production de solutions liquides à fort pouvoir de conservation.

En effet, on sait que la matière végétale est principalement composée de cellulose, d'hémicelluloses et de lignines. Or, une pyrolyse basse température telle que précédemment définie permet de dégrader préférentiellement les polysaccharides (cellulose et hémicelluloses) qui sont à l'origine de la formation des acides carboxyliques. La lignine est alors peu dégradée et les taux de phénols émis sont relativement faibles.

La solution liquide ainsi obtenue est par conséquent riche en acides carboxyliques mais pauvre en phénols.

L'utilisation de ces solutions liquides par des procédés de mise en oeuvre tels que la vaporisation ou l'atomisation (reconstitution d'un brouillard de fumée dans la cellule de cuisson), le douchage, le trempage, l'ajout direct ou tout autre type de mise en oeuvre permet à l'utilisateur de déterminer l'intensité du goût, de la coloration finale et la conservabilité du produit fumé.

L'utilisation de colorants alimentaires tels que notamment le carmin, le paprika, le rocou etc. en combinaison ou non avec une fumée (liquide) aromatisante, un agent de conservation (par exemple, une solution à fort pouvoir de conservation), un agent colorant (par exemple, une solution colorante par réaction de Maillard) dans le but d'intensifier, modifier ou ajuster la coloration du produit est particulièrement avantageuse lors d'une mise en oeuvre par procédé d'atomisation car elle permet une économie de main d'oeuvre et conduit à une teinte plus homogène du produit alimentaire. Une économie au niveau des quantités de produits utilisés est également réalisée par rapport à des procédés tels que le douchage ou le trempage.

Le mélange direct des différentes solutions liquides pouvant être mises en oeuvre étant souvent rendu difficile par la présence de composés peu hydrosolubles, essentiellement présents dans la fumée liquide aromatisante qui ont tendance à provoquer une précipitation d'une partie de la fraction aromatique, on préférera une utilisation séparée des différentes solutions et fumées liquides ce qui permet de tirer le meilleur profit du profil aromatique et du pouvoir de coloration des solutions précitées mises en oeuvre.

Une alternative à l'utilisation des solutions et fumées liquides décrites dans cette invention est la mise en oeuvre, in situ, c'est-à-dire dans la cellule de traitement même des aliments à préparer, de générateurs de fumées spécifiques.

En effet, les générateurs de fumées tels que décrits dans les demandes françaises mentionnées plus haut permet la production de fumées à fort potentiel aromatique, à fort potentiel de coloration ou à fort potentiel de conservation par la mise en oeuvre de divers paramètres de pyrolyse et par un choix judicieux de la matière végétale pyrolysée.

De façon avantageuse, la température de pyrolyse peut être ajustée de façon à produire une fumée de bois riche en phénols (dégradation de la lignine du bois entre environ 330 °C et 400 °C), une fumée riche en composés carbonylés (pyrolyse à plus de 400 °C de matières végétales ne contenant pas de lignine) ou une fumée à fort potentiel de conservation (pyrolyse de bois ou de matières végétales entre environ 150 °C et 300 °C).

L'utilisation dissociée ou séquentielle de tels générateurs de fumées permet à l'utilisateur de fixer librement et indépendamment l'intensité du goût, de la couleur et la conservabilité des denrées alimentaires traitées.

Les exemples non-limitatifs suivants permettent de mieux comprendre les avantages de la présente invention :

### Exemple 1 :

De la poitrine de porc a été fumée à l'aide de deux solutions obtenues à partir de fumées liquides.

La première est une fumée liquide (ci-après dénommée FL1) permettant principalement de donner un goût fumé identique au goût fumé traditionnel. Les caractéristiques physico-chimiques de cette fumée liquide sont les suivantes :
- Densité : 1,1 kg/l
- pH : 1,9

Analyses par chromatographie phase gazeuse (pourcentages massiques) :
- acides (acide acétique) : 18 %
- phénols : 35 mg/ml
- furanes : 26 mg/ml

Cette fumée liquide a été obtenue par pyrolyse de bois de hêtre en utilisant des paramètres de procédés de fabrication similaires à ceux mis en oeuvre dans un fumoir traditionnel et selon le procédé décrit dans la demande française n° 02 08495 susvisée (Température de l'ordre de 350 °C et taux d'oxygène < 0,2 % vol.).

L'analyse en chromatographie gazeuse couplée à une détection en spectrométrie de masse permet de détecter et de quantifier les principales molécules présentes dans la solution. Le profil en phénols est très différent des fumées liquides obtenues par des procédés de type connu sous la dénomination « fast pyrolysis » ou encore « flash pyrolysis » de l'état de la technique mais absolument similaire au profil aromatique obtenu lors de fumaisons traditionnelles.

La seconde fumée liquide (ci-après dénommée FL2) est composée essentiellement de composés carbonylés et présente une densité de 1,05 kg/l. Elle est obtenue par pyrolyse de polysaccharides à haute température (T > 600 °C) suivi d'une étape de purification.

Analyses par chromatographie phase gazeuse (pourcentages massiques):
- acides (acide acétique) : < 0,5 %
- phénols : < 1 mg/ml
- furanes : < 1 mg/ml
- carbonyles : 12,8 %

L'intensité du goût est déterminée par une évaluation sensorielle alors que la couleur est déterminée par mesure colorimétrique selon le système CIELab (système de coordonnées trichromatiques L* a* b*) à l'aide d'un spectrocolorimètre MINOLTA.

Les solutions de fumées liquides sont appliquées par vaporisation (spraying) avant cuisson à 60 °C pendant 1 h 15.

Les analyses sensorielles ont révélé la présence d'un goût fumé très doux et très rond tout à fait semblable au goût fumé traditionnel pour les échantillons traités à l'aide de la fumée liquide aromatisante. Les échantillons traités à l'aide de la fumée au fort pouvoir colorant ne présentent pas de goût fumé significatif. Les résultats de l'analyse colorimétrique sont présentés dans le tableau I suivant : 1

**Tableau 1**

| Echantillon | L* | a* | b* |
|---|---|---|---|
| Poitrine de porc témoin | 60,8 | 6,0 | 23,6 |
| Poitrine de porc + fumée aromatisante | 49,2 | 14,3 | 20,1 |
| Poitrine de porc + fumée colorante | 50,7 | 12,0 | 17,9 |
| Poitrine de porc + fumée aromatisante + fumée colorante | 42,0 | 11,5 | 16,1 |

Cet exemple met en évidence la possibilité d'obtenir des produits fumés ayant un profil aromatique et une couleur identiques, voir supérieurs aux produits fumés par un fumage traditionnel tout en utilisant des fumées liquides.

La fumée liquide aromatisante contribue également à la coloration du produit alimentaire par des mécanismes sensiblement différents des réactions de Maillard et par la présence de fonctions carbonyles pour certaines molécules aromatiques (furanes en particulier).

La fumée colorante permet d'intensifier cette coloration par réaction de Maillard. La concentration et la quantité de produit utilisé permettent à l'utilisateur d'ajuster la couleur finale et l'intensité de la couleur finale du produit.

L'action de la fumée à fort potentiel aromatique permet d'ajuster l'intensité du goût fumé en jouant sur des paramètres tels que le temps de fumage, la concentration du produit ou encore la quantité de produit utilisée. Une couleur de base ne peut être évitée.

L'action de la fumée à fort pouvoir de coloration permet d'intensifier la coloration initiale (de base) du produit sans modification du goût.

### Exemple 2 :

Des essais de miscibilité entre les fumées à fort pouvoir aromatique et fort pouvoir colorant ont été effectués. Une fumée à fort pouvoir aromatique (FL1) est mélangée à une fumée liquide à fort pouvoir colorant (FL2).

Les compositions résultant de ces mélanges sont données dans le tableau II ci-dessous (pourcentages exprimés en masse).

**Tableau II**

| Composition | FL1 | FL1 + 5 % FL2 | FL1 + 10 % FL2 | FL1 +20 % FL2 | FL1 +30 % FL2 |
|---|---|---|---|---|---|
| carbonyles (g/l) | 37 | 29 | 27 | 23 | 23 |
| hétérocycles (g/l) | 37 | 33 | 33 | 24 | 23 |
| acides (g/l) | 151 | 143 | 139 | 110 | 102 |
| phénols (g/l) | 34,2 | 27,4 | 25,9 | 19,8 | 15,8 |

Abstraction faite du phénomène de dilution, les mélanges obtenus ne contiennent plus la totalité des phénols présents dans FL1.

Une précipitation est observée lors du mélange de FL1 avec FL2, une partie des phénols peu hydrosolubles présents dans FL1 conduisant à la formation d'une fraction goudronneuse à l'origine de la précipitation observée.

La fumée liquide FL1 présente cependant un taux d'acides carboxyliques important qui contribue à améliorer la solubilité de composés peu hydrosolubles (phénols, furanes...). Cette fumée liquide donne lieu à moins de précipitations que la plupart des fumées liquides présentes actuellement sur le marché.

Cet exemple met en évidence la nécessité d'utiliser séparément les solutions et fumées liquides aromatisantes, colorantes et de conservation.

Une mise en oeuvre possible par atomisation de ces solutions et fumées liquides spécifiques est l'utilisation de plusieurs circuits d'injection dissociés. L'un des circuits est utilisé pour atomiser la fumée liquide à fort pouvoir aromatique alors que les autres circuits d'atomisation permettent de soumettre le produit à la fumée liquide à fort pouvoir aromatique, à une solution contenant des colorants alimentaires ou à une solution liquide à fort pouvoir de conservation.

Une atomisation séquentielle de ces différentes solutions liquides (fumées liquides aromatisante, fumée liquide colorante ou colorant alimentaire, fumée à fort pouvoir de conservation) est également possible. Le produit alimentaire est soumis alternativement à l'action de l'une ou de l'autre des solutions liquides.

Un mélange des solutions liquides (fumées liquides aromatisante, fumée liquide colorante ou colorant alimentaire) en amont de la buse d'atomisation reste cependant possible.

L'ajout de tensioactifs, polysorbates, etc., dans le but de solubiliser les différentes solutions est alors nécessaire mais peut éventuellement conduire à une modification des propriétés d'adsorption et d'absorption des fumées et solutions liquides à la surface du produit alimentaire.

L'utilisation en trempage est rendue possible par la mise en oeuvre de bains séparés pour chacune des fumées liquide spécifiques ou des colorants alimentaires.

L'utilisation en douchage est rendu possible par la mise en oeuvre de douches séparées pour chacune des fumées liquides spécifiques ou des colorants alimentaires.

### Exemple 3 :

La fumée liquide aromatisante obtenue par le procédé décrit par la demande française n° 02 08495 présente un taux d'acides carboxyliques (acide acétique, formique, propanoïque, butanoïque, etc.) important ce qui permet d'augmenter la solubilité de composés peu hydrosolubles tels que les phénols et les furanes dans cette fumée liquide.

Cette fumée liquide permet d'atténuer les phénomènes de précipitation au contact de l'eau par rapport à la plupart des fumées liquides commerciales présentes sur le marché qui contiennent moins d'acides carboxyliques.

Un autre avantage est une amélioration de la conservation des produits alimentaires par l'action conservatrice des acides organiques et des phénols présents en quantités importantes dans la fumée liquide.

Des saucisses de Francfort ont été fumées par atomisation à l'aide d'une fumée liquide A produite selon le procédé décrit par la demande française n° 02 08495 à partir de bois de hêtre pyrolysé à une température de 290 °C (taux d'oxygène < 0,1 % vol.) et dont les caractéristiques sont les suivantes :
- Densité : 1,03 kg/l
- pH : 1,8

Analyses par chromatographie phase gazeuse (pourcentages massiques) :
- acides (acide acétique) : 22,4%
- phénols : 5,3 mg/ml
- furanes : 12,4 mg/ml

Les mêmes saucisses ont été soumises à l'action d'une fumée liquide B (obtenues par pyrolyse « flash » de bois de Hikory à une température de l'ordre de 700 °C), ce dans les mêmes conditions qu'avec la fumée liquide A et présentant la composition suivante :

### Fumée B

- densité : 1,1 kg/l
- pH : 2,9

Analyses par chromatographie en phase gazeuse (pourcentages massiques):
- acides (acide acétique) : 8,6 %
- phénols : 19 mg/ml
- furanes : 20 mg/ml

Une étude bactériologique a été menée afin de comparer l'effet de conservation de ces fumées liquides :

Les saucisses ont été conservées 15 jours à 4 °C.

Les résultats des analyses bactériologiques effectuées au bout de 15 jours sont donnés dans le tableau III ci-après.

**Tableau III**

| | Saucisses non fumées | Saucisses fumées A | Saucisses fumées B |
|---|---|---|---|
| Fleur mésophile | 10 000 000 /g | 200 000 /g | 1 400 000 /g |
| Levure | 10 000 /g | < 100 /g | < 100 /g |
| Moisissure | 1 500 /g | < 100 /g | 1000 /g |

Il apparaît clairement que la fumée liquide A confère au produit alimentaire une meilleure conservation que la fumée B. Ceci semble notamment dû à la composition chimique, riche en acides carboxyliques de la fumée liquide A.

Il devient ainsi possible pour le producteur de denrées alimentaires fumées d'ajuster librement l'intensité du goût, la conservabilité et la couleur du produit fumé. De même, l'utilisation de colorants alimentaires permet à l'utilisateur de corriger ou d'affiner la couleur dudit produit alimentaire.

Le procédé selon la présente invention permet ainsi de produire des produits fumés présentant un goût similaire voire identique à celui obtenu par fumage traditionnel tout en présentant un aspect esthétique renforcé et de préférence une durée de conservation (date limite de consommation, DLC ou DLUO) augmentée.

De préférence, les fumées liquides utilisées dans le cadre de la présente invention sont obtenues par le procédé décrit par les demandes françaises n° 02 08495 du 05.07.2002 et n° 03 00925 du 28.01.2003 utilisant un réacteur vibré ou muni d'une vis sans fin rotative chauffée par effet Joule. En effet, un des avantages essentiels de l'utilisation de ces réacteurs consiste à permettre un traitement thermique en continu de matières végétales avec un contrôle strict des paramètres de traitement. Les possibilités de traitement des deux types de réacteurs précités permettent de produire des fumées et des fumées liquides avec une pyrolyse parfaitement contrôlée de la matière végétale. Les fumées liquides ainsi obtenues peuvent être utilisées par pulvérisation d'un mélange air-distillat de fumée directement dans la cellule de fumage, trempage, douchage ou encore par ajout direct à la denrée alimentaire. La fumée ne contient ni goudrons ni hydrocarbures aromatiques polycycliques nocifs. La fumée ainsi produite correspond à l'intégralité de la fraction aromatique issue de la pyrolyse du bois obtenue par des procédés traditionnels.

Un réacteur de type REVE (réacteur élévateur vibré électrique) particulièrement bien adapté au procédé selon la présente invention est celui commercialisé par la société REVTECH (Charmes sur Rhône), objet de la demande de brevet français n° 91 10 935 publiée sous le numéro FR 2 680 638 A1.

Un four de traitement similaire à celui décrit dans ce brevet, dans la demande allemande DE 35 04 950 ou tout autre type de four vibré adapté, indépendamment de la source de chaleur employée pour déclencher la réaction de pyrolyse proprement dite, conviennent également comme réacteurs à pyrolyse utilisables dans le cadre du procédé de la présente invention et cette dernière n'est donc pas limitée à ces deux exemples de dispositifs particuliers.

Un tel type de réacteur de type REVE combine avantageusement la technologie de transport des particules par vibration et la technologie du tube à passage de courant, et permet ainsi l'accès à des techniques évoluées de traitements thermiques de solides divisés. Ce réacteur permet ainsi le traitement thermique en continu de la matière organique à pyrolyser. Le transport de la matière organique à pyrolyser y est assuré par vibration selon le principe des spires élévatrices. La matière organique à pyrolyser est introduite de manière classique (alimentation manuelle ou automatique, trémie...) à l'une des extrémités (de préférence par le bas) du ou des éléments tubulaires et évolue sous l'effet des vibrations imparties auxdits tubes jusqu'à l'autre extrémité (de préférence supérieure) où elle est récupérée de manière également classique (bac de récupération ou analogue). Les vibrations peuvent, par exemple, être générées par une table vibrante mue par un organe moteur capable de communiquer à ladite table des mouvements vibratoires dans un plan horizontal, par exemple une rotation, et des vibrations dans le sens vertical. A cet effet, les vibrations peuvent être générées de manière connue par des moteurs avec des balourds ou tout autre dispositif équivalent.

Le ou les éléments tubulaires traversent une enceinte fixe qui permet d'apporter des calories et d'élever la température dudit ou desdits éléments tubulaires soit directement soit indirectement. A titre d'exemple préféré, le passage d'un courant électrique dans le tube de transport permet de générer de la chaleur par effet Joule dans la masse du tube.

Le ou les éléments tubulaires peuvent être constitués par un serpentin en inox parfaitement fermé. L'atmosphère de traitement peut donc être strictement contrôlée. Le traitement de la matière organique peut donc être effectué sous gaz inerte (azote ou tout autre gaz inerte), sous gaz partiellement oxydant (mélange azote/oxygène à différentes concentrations en oxygène) ou encore sous dioxyde de carbone ou sous un recyclage des fumées produites (recyclage des gaz de pyrolyse lors du traitement thermique).

De manière particulièrement avantageuse, les fumées produites sont condensées à leur sortie du réacteur dans un dispositif de condensation adapté et selon une variante particulièrement économique au moins une partie des gaz de pyrolyse présents à la sortie du dispositif de condensation est réinjectée dans le réacteur.

Les temps de séjour de la matière organique à pyrolyser peuvent également être fixés de façon précise. En effet, la technologie du tube vibrant permet un écoulement « piston » de la matière à traiter. Ainsi, l'inclinaison des moteurs à balourds ainsi que la fréquence et l'amplitude des vibrations permettent de contrôler le temps de séjour de ladite matière dans le réacteur. Ce temps de séjour peut varier, selon les conditions, de quelques secondes à environ 30 minutes.

La technologie du transport par tube vibrant permet de traiter des solides divisés à granulométrie large permettant de mettre en oeuvre une large gamme allant des poudres microniques à des morceaux de plusieurs centimètres de matière organique.

Comme expliqué, la température de pyrolyse (de 150 °C à 300 °C ou de 200 °C à 800°C) ainsi que les profils de température sont parfaitement contrôlés au degré près. La possibilité d'une architecture électrique permettant de mettre en oeuvre plusieurs zones de chauffe indépendantes permet, le cas échéant, de contrôler le profil thermique de traitement de la matière végétale. La mise en place d'une zone de refroidissement, par l'utilisation de quelques spires non calorifugées ou par double enveloppe contenant un fluide froid, permet d'obtenir des températures basses et constantes de la matière pyrolysée à la sortie du réacteur.

La décomposition thermique de la matière organique et notamment du bois dans le cadre de la présente invention est préférentiellement obtenue à des températures de pyrolyse relativement basses à l'aide de réacteurs du type REVE (principalement entre 150 °C et 300°C). Les fumées et fumées liquides contiennent alors peu d'hydrocarbures aromatiques polycycliques qui sont généralement formés à de plus hautes températures de pyrolyse.

Un traitement thermique homogène de matière organique à granulométrie variable (par exemple sciure de bois de quelques microns à plusieurs centimètres) est possible par avancement « piston » de la matière dans le réacteur et par un contact intime entre la matière végétale et le tube chaud. L'écoulement « piston » permet de contrôler avec précision la température de la matière et les temps de séjour.

Le chauffage est assuré par conduction entre le tube et la matière végétale. Le procédé ne requiert pas l'utilisation de grosses quantités de gaz à gérer ou à dépolluer. Les risques de zones froides (pièges à suies) sont minimisés.

L'étanchéité du système, sans pièces mécaniques, permet de minimiser les risques d'odeurs émises et d'exposition du personnel aux gaz de pyrolyse. Le nettoyage de l'installation est aisé par pyrolyse sous air, par circulation de liquide de nettoyage dans les spires ou encore par obus racleur.

Le rendement thermique de l'appareil est proche de 80 % par contact intime entre la matière végétale et le tube chaud de transport ainsi qu'une combinaison complexe de conduction, d'induction et de rayonnement vers le produit à chauffer.

Le transport par tube vibrant n'engendre pas d'abrasion de la matière organique à pyrolyser et limite les émissions de poudres de charbon. L'encrassement du réacteur par des dépôts de suies est peu important.

Dès lors, les réacteurs du type évoqué ci-dessus peuvent être avantageusement employés à la production de fumées. En effet, le procédé mettant en oeuvre des d'éléments tubulaires vibrants permet de produire une fumée dont la qualité et la concentration sont parfaitement contrôlées tout en minimisant les risques d'incendie.

De la même manière, un réacteur de type connu sous la dénomination « SPIRAJOULE » commercialisé par la société ETIA (Compiègne) et décrit dans la demande de brevet français n° FR 2 775 621 permet une pyrolyse contrôlée de matières végétales.

L'avancement de la matière dans le réacteur y est assuré par un organe de brassage (vis sans fin) qui permet un écoulement piston de la matière végétale à pyrolyser et constitue également le moyen de chauffage. La totalité ou la quasi-totalité des matières brutes de départ va donc s'échauffer directement au contact dudit moyen de chauffage et ce sans stationner sur la surface d'échauffement. Le chauffage desdites matières est ainsi réalisé de manière uniforme. L'organe de brassage est réalisé en un matériau électriquement conducteur de manière à générer un échauffement par effet Joule lors d'un passage de courant dans ledit organe de brassage.

Un tel type de générateur permet de pyrolyser la matière végétale à un degré Celsius près, l'enceinte hermétique permettant de contrôler la composition de l'atmosphère y régnant et notamment le taux d'oxygène présent dans le réacteur de pyrolyse.

Dans ces conditions, les fumées produites par le procédé selon l'invention peuvent être totalement standardisées et sont avantageusement exemptes ou quasi-exemptes de goudron et d'hydrocarbures aromatiques polycycliques nocifs.

En outre, lesdites fumées peuvent être diluées avec de l'air chaud ou tout autre gaz en sortie de réacteur afin de produire des fumées plus ou moins concentrées. Elles peuvent alors directement enter dans une cellule de fumaison, sans autre étape de conditionnement ou de purification.

L'utilisation du procédé selon la présente invention permet donc de produire des fumées avec un rendement élevé et sans production de goudrons ni d'hydrocarbures aromatiques polycycliques (HAP) contrairement aux réacteurs et générateurs de fumées actuellement présents sur le marché.

La fumée liquide obtenue selon l'invention est riche en composés aromatiques (phénols) et en carbonyles. Ces derniers sont à l'origine de la coloration particulièrement efficace et réaliste des produits fumés avec les fumées selon l'invention dues aux réactions de Maillard avec les protéines contenues dans lesdites denrées alimentaires traitées.

## Revendications

1. Procédé de préparation d'un produit alimentaire, **caractérisé en ce qu'**il comprend essentiellement au moins une étape d'aromatisation consistant à donner un goût fumé audit produit alimentaire en appliquant une fumée ou une fumée liquide audit produit alimentaire et au moins une étape de coloration, indépendante de ladite étape d'aromatisation, consistant à donner une couleur supplémentaire ou une nuance particulière supplémentaire audit produit alimentaire, en particulier en renforçant la couleur précédemment obtenue en effectuant des réactions de Maillard ou en mettant en contact ledit produit alimentaire avec au moins une composition colorante comprenant au moins un colorant choisi dans le groupe formé par les colorants de n° CE choisi dans la liste formée par : E 100, E 101, E 102, E 104, E 110, E 120, E 122, E 123, E 124, E 127, E 128, E 129, E 131, E 132, E 133, E 140, E 141, E 142, E 150a, E 150b, E 150c, E 150d, E 151, E 153, E 154, E 155, E 160a, E 160b, E 160c, E 160d, E 160e, E 160f, E 161b, E 161g, E 162, E 163, E 170, E 171, E 172, E 173, E 174, E 175 et E 180.

2. Procédé selon la revendication 1, **caractérisé en ce qu'**il comprend en outre une étape de conservation, indépendante desdites étapes d'aromatisation et de coloration consistant à mettre en contact le produit alimentaire à préparer ou déjà partiellement préparé avec au moins une composition de conservation obtenue par pyrolyse d'au moins une matière végétale et/ou comprenant au moins un composé choisi dans le groupe formé par les conservateurs de n° CE choisi dans le groupe formé par E 200, E 202, E 203, E 210, E 211, E 212, E 213, E 235, E 249, E 250, E 251, E 252, E 260, E 262, E 263, E 270, E 300, E 301, E 325, E 326, E 330 et E 334.

3. Procédé selon la revendication 2, **caractérisé en ce que** l'étape de conservation se fait en appliquant audit produit alimentaire une fumée obtenue par pyrolyse d'au moins une matière organique végétale à une température comprise entre 150 °C et 300 °C, de préférence entre 200 °C et 280 °C, éventuellement suivie d'une étape supplémentaire de purification des fumées produites, ce afin d'en réduire à une concentration acceptable la teneur en composés indésirables du type hydrocarbures aromatiques polycycliques (HAP), composés phénoliques et analogues.

4. Procédé selon la revendication 2, **caractérisé en ce que** l'étape de conservation se fait en appliquant audit produit alimentaire une fumée liquide obtenue par pyrolyse d'au moins une matière organique végétale à une température comprise entre 150 °C et 300 °C, de préférence entre 200 °C et 280 °C, éventuellement suivie d'une étape supplémentaire de purification des fumées produites, ce afin d'en réduire à une concentration acceptable la teneur en composés indésirables du type hydrocarbures aromatiques polycycliques (HAP), composés phénoliques et analogues, lesdites fumées produites, éventuellement purifiées, étant condensées sous forme liquide une fois produites dans un dispositif de condensation adapté.

5. Procédé selon l'une quelconque des revendications 1 à 4, **caractérisé en ce que** l'étape d'aromatisation se fait en appliquant audit produit alimentaire, une fumée obtenue par pyrolyse d'au moins une matière organique végétale à une température comprise entre 200 °C et 800 °C, de préférence entre 300 °C et 400 °C, éventuellement suivie d'une étape supplémentaire de purification des fumées produites lorsque ladite température de pyrolyse est comprise entre 400 °C et 800 °C, ce afin de réduire à une concentration acceptable la teneur en composés indésirables du type hydrocarbures aromatiques polycycliques (HAP).

6. Procédé selon l'une quelconque des revendications 1 à 5, **caractérisé en ce que** l'étape d'aromatisation se fait en appliquant audit produit alimentaire, une fumée liquide obtenue par pyrolyse d'au moins une matière organique végétale à une température comprise entre 200 °C et 800 °C, de préférence entre 300 °C et 400 °C, éventuellement suivie d'une étape supplémentaire de purification des fumées produites lorsque ladite température de pyrolyse est comprise entre 400 °C et 800 °C, ce afin de réduire à une concentration acceptable la teneur en composés indésirables du type hydrocarbures aromatiques polycycliques (HAP), les fumées produites, éventuellement purifiées, étant condensées sous forme liquide une fois produites dans un dispositif de condensation adapté.

7. Procédé selon l'une quelconque des revendications 2 à 6, **caractérisé en ce que** la pyrolyse se fait sous contrôle précis, à 0,1 % près, de la teneur en volume en oxygène lors de ladite pyrolyse.

8. Procédé selon l'une quelconque des revendications 2 à 7, **caractérisé en ce que** la pyrolyse se fait sous contrôle précis, à un degré Celsius près, de la température de pyrolyse.

9. Procédé selon l'une quelconque des revendications 2 à 8, **caractérisé en ce que** la matière organique pyrolysée est essentiellement constituée de fibres ou copeaux d'au moins une substance végétale telle que le bois, la cellulose ou de tout autre mono ou polysaccharide ou complexe ligno-cellulosique.

10. Procédé selon l'une quelconque des revendications 2 à 9, **caractérisé en ce que** la pyrolyse se déroule dans un réacteur élévateur vibré du type comprenant essentiellement une enceinte chauffable sensiblement hermétique contenant au moins un élément tubulaire ascendant mis en vibration et recevant une matière organique à pyrolyser, pour la production de fumées ou de fumées liquides destinées à la fumaison de denrées alimentaires.

11. Procédé selon l'une quelconque des revendications 2 à 9, **caractérisé en ce que** la pyrolyse se déroule dans un réacteur comprenant essentiellement une enceinte chauffable sensiblement hermétique contenant au moins une vis sans fin rotative chauffée par effet Joule, ladite au moins une vis recevant une matière organique à pyrolyser, pour la production de fumées destinées à une fumaison de denrées alimentaires.

12. Procédé selon l'une quelconque des revendications 4 et 6 à 11, **caractérisé en ce que** les fumées liquides utilisées présentent, une fois condensées, une teneur en volume en benze[a]pyrène d'au plus 10 ppb et une teneur en volume en benzoanthracène d'au plus 20 ppb.

13. Procédé selon l'une quelconque des revendications 1 à 12, **caractérisé en ce que** l'étape de coloration est réalisée en effectuant des réactions de Maillard sur le produit alimentaire à préparer ou déjà partiellement préparé.

14. Procédé selon la revendication 13, **caractérisé en ce que** l'étape de coloration se fait en mettant en contact le produit alimentaire à colorer avec une composition contenant au moins une substance carbonylée autre que l'hydroxyacétaldéhyde et les sucres réducteurs.

15. Procédé selon la revendication 14, **caractérisé en ce que** l'étape de coloration se fait en mettant en contact le produit alimentaire à colorer avec une composition contenant au moins une substance choisie dans le groupe formé par l'hexadécanal, le glutaraldéhyde, le 2-éthylhexanal, le farnesal, le 2-buténal, le 2-méthylhexanal, le glyoxal, le 2-méthylpentanal, le néral, le tridécanal, le 2-hexanal et le 2-propénal.

16. Procédé selon la revendication 13, **caractérisé en ce que** l'étape de coloration se fait en mettant en contact le produit alimentaire à colorer avec une composition aminée contenant au moins un acide aminé.

17. Procédé selon l'une quelconque des revendications 1 à 16, **caractérisé en ce qu'**une, plusieurs ou toutes les étapes parmi celles d'aromatisation, de coloration et de conservation sont réalisées par pulvérisation indépendante de compositions liquides prêtes à l'emploi obtenues à partir de la ou des compositions d'aromatisation, de coloration et de conservation sur le produit alimentaire à préparer ou déjà partiellement préparé.

18. Procédé selon l'une quelconque des revendications 1 à 17, **caractérisé en ce qu'**une, plusieurs ou toutes les étapes parmi celles d'aromatisation et de conservation sont réalisées par fumage du produit alimentaire à préparer ou déjà partiellement préparé.

19. Denrée alimentaire obtenue par la mise en oeuvre du procédé selon l'une quelconque des revendications 1 à 18.

20. Agent de conservation pour produit alimentaire pour la mise en oeuvre du procédé selon l'une quelconque des revendications 3 ou 5 à 18, **caractérisé en ce qu'**il consiste en une fumée obtenue par pyrolyse d'au moins une matière organique à une température comprise entre 150 °C et 300 °C, de préférence entre 200 °C et 280 °C, éventuellement suivie d'une étape supplémentaire de purification desdites fumées, ce afin d'en réduire à une concentration acceptable la teneur en composés indésirables du type hydrocarbures aromatiques polycycliques (HAP), composés phénoliques et analogues.

21. Agent de conservation pour produit alimentaire pour la mise en oeuvre du procédé selon l'une quelconque des revendications 4 ou 6 à 18, **caractérisé en ce qu'**il consiste en une fumée liquide obtenue par pyrolyse d'au moins une matière organique à une température comprise entre 150 °C et 300 °C, de préférence entre 200 °C et 280 °C, éventuellement suivie d'une étape supplémentaire de purification des fumées produites, ce afin d'en réduire à une concentration acceptable la teneur en composés indésirables du type hydrocarbures aromatiques polycycliques (HAP), composés phénoliques et analogues, lesdites fumées produites, éventuellement purifiées, étant condensées sous forme liquide une fois produites dans un dispositif de condensation adapté.

22. Agent de conservation selon la revendication 20 ou 21, **caractérisé en ce qu'**il présente une teneur en acides carboxyliques issus de la pyrolyse compris en poids entre 1 % et 50 %.

23. Utilisation d'une composition contenant au moins une substance carbonylée autre que l'hydroxyacétaldéhyde et les sucres réducteurs pour la coloration par réactions de Maillard d'un produit alimentaire.

24. Utilisation selon la revendication 23, **caractérisé en ce que** la composition contient au moins une substance choisie dans le groupe formé par l'hexadécanal, le glutaraldéhyde, le 2-éthylhexanal, le farnesal, le 2-buténal, le 2-méthylhexanal, le glyoxal, le 2-méthylpentanal, le néral, le tridécanal, le 2-hexanal et le 2-propénal.

## Claims

1. Method of preparing a food product, **characterised in that** it comprises essentially at least one flavouring stage consisting in providing the food product with a smoked taste by applying a smoke or liquid smoke to the said food product and at least one colouring stage, independent of the said flavouring stage, consisting in providing the said food product with a supplementary colour or a particular supplementary nuance, more particularly by intensifying the colour previously obtained by carrying out Maillard reactions or by placing the said food product into contact with at least one colouring composition comprising at least one colouring selected from the group formed by the colourings of the EC number selected from the list formed by: E 100, E 101, E 102, E 104, E 110, E 120, E 122, E 123, E 124, E 127, E 128, E 129, E 131, E 132, E 133, E 140, E 141, E 142, E 150a, E 150b, E 150c, E 150d, E 151, E 153, E 154, E 155, E 160a, E 160b, E 160c, E 160d, E 160e, E 160f, E 161b, E 161g, E 162, E 163, E 170, E 171, E 172, E 173, E 174, E 175 and E 180.

2. Method according to claim 1, **characterised in that** it comprises in addition a preserving stage which is independent of the said flavouring and colouring stages consisting in bringing the food product which is to be or which has already been partially prepared with at least one preserving composition obtained by pyrolysis of at least one vegetable matter and/or comprising at least one compound selected from the group formed by the preservatives of the EC number selected from the group formed by E 200, E 202, E 203, E 210, E 211, E 212, E 213, E 235, E 249, E 250, E 251, E 252, E 260, E 262, E 263, E 270, E 300, E 301, E 325, E 326, E 330 and E 334.

3. Method according to claim 2, **characterised in that** the preserving stage is undertaken by applying to the said food product a smoke obtained by pyrolysis of at least one organic vegetable matter at a temperature contained between 150°C and 300°C, preferably between 200°C and 280°C, where applicable followed by a supplementary stage of purifying the smoke produced, in order to reduce to an acceptable concentration in same the amount of undesirable compounds of the polycyclic aromatic hydrocarbon type (PAH), phenol compounds and the like.

4. Method according to claim 2, **characterised in that** the preserving stage is carried out by applying to the said food product a liquid smoke obtained by pyrolysis of at least one organic vegetable matter at a temperature contained between 150°C and 300°C, preferably between 200°C and 280°C, where applicable followed by a supplementary stage of purifying the smoke produced, in order to reduce to an acceptable concentration in same the amount of undesirable compounds of the polycyclic aromatic hydrocarbon type (PAH), phenol compounds and the like, the said smoke produced, purified where applicable, being condensed in liquid form once produced in a suitable condensation device.

5. Method according to any of claims 1 to 4, **characterised in that** the flavouring stage is carried out by applying to the said food product a smoke obtained by pyrolysis of at least one organic vegetable matter at a temperature contained between 200°C and 800°C, preferably between 300°C and 400°C, followed where applicable by a supplementary stage of purifying the smoke produced when the said pyrolysis temperature is contained between 400 °C and 800°C, in order to reduce to an acceptable concentration the amount of undesirable compounds of the polycyclic aromatic hydrocarbon type (PAH).

6. Method according to any of claims 1 to 5, **characterised in that** the flavouring stage is carried out by applying to the said food product a liquid smoke obtained by pyrolysis of at least one organic vegetable material at a temperature contained between 200°C and 800°C, preferably between 300°C and 400°C, followed where applicable by a supplementary stage of purifying the smoke produced when the said pyrolysis temperature is contained between 400°C and 800°C, in order to reduce to an acceptable concentration the amount of undesirable compounds of the polycyclic aromatic hydrocarbon type (PAH), the smoke produced, purified where applicable, being condensed in liquid form once produced in a suitable condensation device.

7. Method according to any of claims 2 to 6 **characterised in that** the pyrolysis is carried out with strict control, close to 0.1%, of the amount in volume of oxygen during the said pyrolysis.

8. Method according to any of claims 2 to 7, **characterised in that** the pyrolysis is carried out with strict control, close to one degree Celsius, of the pyrolysis temperature.

9. Method according to any of claims 2 to 8, **characterised in that** the pyrolyzed organic material is essentially comprised of fibres or shavings of at least one vegetable substance such as wood, cellulose or any other mono or polysaccharide or lignocellulose complex.

10. Method according to any of claims 2 to 9, **characterised in that** the pyrolysis is carried out in a vibrating lift reactor of the type comprising essentially a substantially hermetic heatable chamber containing at least one rising tubular element set in vibration and receiving an organic material which is to be pyrolyzed, for the production of smoke or liquid smoke intended for smoking foodstuffs.

11. Method according to any of claims 2 to 9, **characterised in that** the pyrolysis is carried out in a reactor comprising essentially a substantially hermetic heatable chamber containing at least one endless rotary screw heated by the Joule effect, the said at least one screw receiving an organic material to be pyrolyzed, for the production of the smoke intended for smoking the foodstuffs.

12. Method according to any of claims 4 and 6 to 11, **characterised in that** the liquid smoke used has, once condensed, a maximum concentration by volume of benzo[a]pyrene of 10 ppb and a maximum concentration by volume of benzoanthracene of 20 ppb.

13. Method according to any of claims 1 to 12, **characterised in that** the colouring stage is performed by carrying out Maillard reactions on the food product which is to be prepared or which has already been partially prepared.

14. Method according to claim 13, **characterised in that** the colouring stage is carried out by placing the food product which is to be coloured in contact with a composition containing at least one carbonylated substance other than hydroxyacetaldehyde and reducing sugars.

15. Method according to claim 14, **characterised in that** the colouring stage is carried out by placing the food product which is to be coloured in contact with a composition containing at least one substance selected from the group formed by hexadecanal, glutaraldehyde, 2-ethylhexanal, farnesal, 2-butenal, 2-methylhexanal, glyoxal, 2-methylpentanal, neral, tridecanal, 2-hexanal and 2-propenal.

16. Method according to claim 13, **characterised in that** the colouring stage is carried out by placing the food product which is to be coloured in contact with an amino compound containing at least one amino acid.

17. Method according to any of claims 1 to 16, **characterised in that** one, several or all of the stages from the flavouring, colouring and preserving stages, are carried out by independent pulverisation of the ready-for-use liquid compositions obtained from the or each flavouring, colouring and preserving compositions on the food product which is to be prepared or has already been partially prepared.

18. Method according to any of claims 1 to 17, **characterised in that** one, several or all of the stages from the flavouring and preserving stages are carried out by smoking the food product which is to be prepared or has already been partially prepared.

19. Foodstuff obtained by carrying out the method according to any of claims 1 to 18.

20. Preserving agent for food products for carrying out the method according to any one of claims 3 or 5 to 18, **characterised in that** it consists of a smoke obtained by pyrolysis of at least one organic material at a temperature contained between 150°C and 300°C, preferably between 200°C and 280°C, followed where applicable by a supplementary stage of purifying the said smoke in order to reduce to an acceptable concentration therein the amount of undesirable compounds of the polycyclic aromatic hydrocarbon type (PAH), phenol compounds, and similar.

21. Preserving agent for food products for carrying out the method according to any of claims 4 or 6 to 18, **characterised in that** it consists of a liquid smoke obtained by pyrolysis of at least one organic matter at a temperature contained between 150°C and 300°C, preferably between 200°C and 280°C, followed where applicable by a supplementary stage of purifying the smoke produced, so as to reduce to an acceptable concentration therein the amount of undesirable compounds of the polycyclic aromatic hydrocarbon type (PAH), phenol compounds and similar, the said smoke produced, purified where applicable, being condensed in liquid form once produced in a suitable condensation device.

22. Preserving agent according to claim 20 or 21, **characterised in that** it has a concentration level of carboxylic acids resulting from the pyrolysis of between 1% and 50% by weight.

23. Use of a compound containing at least one carbonlyated substance other than hydroxyacetaldehyde and reducing sugars for colouring a food product through Maillard reactions.

24. Use according to claim 23, **characterised in that** the composition contains at least one substance selected from the group formed by hexadecanal, glutaraldehyde, 2-ethylhexanal, farnesal, 2-butenal, 2-methylhexanal, glyoxal, 2-methylpentanal, neral, tridecanal, 2-hexanal and 2-propenal.

## Patentansprüche

1. Verfahren zur Herstellung eines Nahrungsmittels, **dadurch gekennzeichnet, dass** es im Wesentlichen umfasst: mindestens einen Aromatisierungsschritt, der darin besteht, dem Nahrungsmittel einen geräucherten Geschmack zu verleihen, indem Rauch oder Flüssigrauch an dem Nahrungsmittel angebracht oder appliziert wird, und mindestens einen vom Aromatisierungsschritt unabhängigen Färbeschritt, der darin besteht, dem Nahrungsmittel eine zusätzliche Farbe oder einen zusätzlichen besonderen Farbton zu verleihen, insbesondere indem die vorher erzielte Farbe verstärkt wird, indem Maillard-Reaktionen durchgeführt werden oder indem das Nahrungsmittel mit mindestens einer farbgebenden Zusammensetzung in Kontakt gebracht wird, die mindestens einen Farbstoff enthält, der in der aus den Farbstoffen mit einer CE-Nummer gebildeten Gruppe gewählt wird und in der Liste gewählt wird, die gebildet wird durch: E 100, E 101, E 102, E 104, E 110, E 120, E 122, E 123, E 124, E 127, E 128, E 129, E 131, E 132, E 133, E 140, E 141, E 142, E 150a, E 150b, E 150c, E 150d, E 151, E 153, E 154, E 155, E 160a, E 160b, E 160c, E 160d, E 160e, E 160f, E 161b, E 161g, E 162, E 163, E 170, E 171, E 172, E 173, E 174, E 175 und E 180.

2. Verfahren nach Anspruch 1, **dadurch gekennzeichnet, dass** es darüber hinaus einen von den Aromatisierungs- und Färbeschritten unabhängigen Konservierungsschritt umfasst, der darin besteht, das herzustellende oder bereits teilweise hergestellte Nahrungsmittel mit mindestens einer Konservierungszusammensetzung in Kontakt zu bringen, die durch Pyrolyse mindestens eines pflanzlichen Stoffes gewonnen wird und/oder mindestens eine Verbindung enthält, die in der Gruppe aus den Konservierungsstoffen mit einer CE-Nummer gewählt wird und in der Gruppe gewählt wird, die gebildet wird aus E 200, E 202, E 203, E 210, E 211, E 212, E 213, E 235, E 249, E 250, E 251, E 252, E 260, E 262, E 263, E 270, E 300, E 301, E 325, E 326, E 330 und E 334.

3. Verfahren nach Anspruch 2, **dadurch gekennzeichnet, dass** der Konservierungsschritt durchgeführt wird, indem das Nahrungsmittel geräuchert wird, wobei der dazu verwendete Rauch durch Pyrolyse mindestens eines pflanzlichen organischen Stoffes bei einer Temperatur zwischen 150°C und 300°C, vorzugsweise zwischen 200°C und 280°C erzeugt wird, eventuell gefolgt von einem zusätzlichen Schritt der Reinigung des erzeugten Rauchs, um dessen Gehalt an unerwünschten Verbindungen vom Typ der polyzyklischen aromatischen Kohlenwasserstoffe (PAK), der Phenolverbindungen und Analogem auf eine annehmbare Konzentration zu senken.

4. Verfahren nach Anspruch 2, **dadurch gekennzeichnet, dass** der Konservierungsschritt durchgeführt wird, indem das Nahrungsmittel mit Flüssigrauch behandelt wird, wobei dazu durch Pyrolyse mindestens eines pflanzlichen organischen Stoffes bei einer Temperatur zwischen 150°C und 300°C, vorzugsweise zwischen 200°C und 280°C Rauch erzeugt wird, eventuell gefolgt von einem zusätzlichen Schritt der Reinigung des erzeugten Rauchs, um dessen Gehalt an unerwünschten Verbindungen vom Typ der polyzyklischen aromatischen Kohlenwasserstoffe (PAK), der Phenolverbindungen und Analogem auf eine annehmbare Konzentration zu senken, und der erzeugte, eventuell gereinigte Rauch nach der Herstellung in einer geeigneten Kondensierungsvorrichtung in die flüssige Phase kondensiert wird.

5. Verfahren nach einem der Ansprüche 1 bis 4, **dadurch gekennzeichnet, dass** der Aromatisierungsschritt durchgeführt wird, indem an dem Nahrungsmittel geräuchert wird, wobei der dazu notwendige Rauch durch Pyrolyse mindestens eines pflanzlichen organischen Stoffes bei einer Temperatur zwischen 200°C und 800°C, vorzugsweise zwischen 300°C und 400°C erzeugt wird, eventuell gefolgt von einem zusätzlichen Schritt der Reinigung des erzeugten Rauchs, wenn die Pyrolysetemperatur zwischen 400°C und 800°C liegt, um den Gehalt an unerwünschten Verbindungen vom Typ der polyzyklischen aromatischen Kohlenwasserstoffe (PAK) auf eine annehmbare Konzentration zu senken.

6. Verfahren nach einem der Ansprüche 1 bis 5, **dadurch gekennzeichnet, dass** der Aromatisierungsschritt durchgeführt wird, indem das Nahrungsmittel mit einem Flüssigrauch geräuchert wird, wobei dazu durch Pyrolyse mindestens eines pflanzlichen organischen Stoffes bei einer Temperatur zwischen 200°C und 800°C, vorzugsweise zwischen 300°C und 400°C erzeugt wird, eventuell gefolgt von einem zusätzlichen Schritt der Reinigung des erzeugten Rauchs, wenn die Pyrolysetemperatur zwischen 400°C und 800°C liegt, um den Gehalt an unerwünschten Verbindungen vom Typ der polyzyklischen aromatischen Kohlenwasserstoffe (PAK) auf eine annehmbare Konzentration zu senken, wobei der erzeugte, eventuell gereinigte Rauch nach der Herstellung in einer geeigneten Kondensierungsvorrichtung in die flüssige Phase kondensiert wird.

7. Verfahren nach einem der Ansprüche 2 bis 6, **dadurch gekennzeichnet, dass** die Pyrolyse unter einer bis auf 0,1% genauen Kontrolle des Volumengehalts an Sauerstoff bei der Pyrolyse durchgeführt wird.

8. Verfahren nach einem der Ansprüche 2 bis 7, **dadurch gekennzeichnet, dass** die Pyrolyse unter einer bis auf ein Grad Celsius genauen Kontrolle der Pyrolysetemperatur durchgeführt wird.

9. Verfahren nach einem der Ansprüche 2 bis 8, **dadurch gekennzeichnet, dass** der pyrolysierte organische Stoff im Wesentlichen durch Fasern oder Späne von mindestens einer pflanzlichen Substanz wie z.B. Holz oder Zellulose oder von jedem anderen Mono- oder Polysaccharid oder Komplex aus Lignin und/oder Zellulose gebildet wird.

10. Verfahren nach einem der Ansprüche 2 bis 9, **dadurch gekennzeichnet, dass** die Pyrolyse in einem gerüttelten Steigereaktor von dem Typ abläuft, der hauptsächlich eine im Wesentlichen hermetische, heizbare Hülle umfasst, die mindestens ein aufsteigendes rohrförmiges Element enthält, das in Schwingung versetzt wird und einen zu pyrolysierenden organischen Stoff zur Herstellung von Rauch oder Flüssigrauch aufnimmt, der zum Räuchern von Nahrungsmitteln bestimmt ist.

11. Verfahren nach einem der Ansprüche 2 bis 9, **dadurch gekennzeichnet, dass** die Pyrolyse in einem Reaktor von dem Typ abläuft, der hauptsächlich eine im Wesentlichen hermetische, heizbare Hülle umfasst, die mindestens eine durch den Joule-Effekt erhitzte, sich drehende endlose Schnecke enthält, wobei die mindestens eine Schnecke einen zu pyrolysierenden organischen Stoff zur Herstellung von Rauch aufnimmt, der zum Räuchern von Nahrungsmitteln bestimmt ist.

12. Verfahren nach einem der Ansprüche 4 und 6 bis 11, **dadurch gekennzeichnet, dass** der verwendete Flüssigrauch nach der Kondensation einen Volumengehalt an Benzo[a]pyren von höchstens 10 ppb und einen Volumengehalt an Benzoanthracen von höchstens 20 ppb aufweist.

13. Verfahren nach einem der Ansprüche 1 bis 12, **dadurch gekennzeichnet, dass** der Färbeschritt ausgeführt wird, indem an dem herzustellenden oder bereits teilweise hergestellten Nahrungsmittel Maillard-Reaktionen durchgeführt werden.

14. Verfahren nach Anspruch 13, **dadurch gekennzeichnet, dass** der Färbeschritt ausgeführt wird, indem das zu färbende Nahrungsmittel mit einer Zusammensetzung in Kontakt gebracht wird, die mindestens eine carbonylierte Substanz enthält, und zwar eine andere als Hydroxyacetaldehyd und reduzierende Zucker.

15. Verfahren nach Anspruch 14, **dadurch gekennzeichnet, dass** der Färbeschritt ausgeführt wird, indem das zu färbende Nahrungsmittel mit einer Zusammensetzung in Kontakt gebracht wird, die mindestens eine Substanz enthält, die in der Gruppe gewählt wird, die aus Hexadecanal, Glutaraldehyd, 2-Ethylhexanal, Farnesal, 2-Butenal, 2-Methylhexanal, Glyoxal, 2-Methylpentanal, Neral, Tridecanal, 2-Hexanal und 2-Propenal gebildet wird.

16. Verfahren nach Anspruch 13, **dadurch gekennzeichnet, dass** der Färbeschritt ausgeführt wird, indem das zu färbende Nahrungsmittel mit einer Amino-Zusammensetzung in Kontakt gebracht wird, die mindestens eine Aminosäure enthält.

17. Verfahren nach einem der Ansprüche 1 bis 16, **dadurch gekennzeichnet, dass** ein, mehrere oder alle Schritte unter den Aromatisierungs-, Färbe- und Konservierungsschritten ausgeführt werden, indem gebrauchsfertige flüssige Zusammensetzungen, die ausgehend von der oder den Zusammensetzungen zur Aromatisierung, Färbung und Konservierung erzielt werden, von einander unabhängig auf dem herzustellenden oder bereits teilweise hergestellten Nahrungsmittel zerstäubt werden.

18. Verfahren nach einem der Ansprüche 1 bis 17, **dadurch gekennzeichnet, dass** ein, mehrere oder alle Schritte unter den Aromatisierungs-, Färbe- und Konservierungsschritten durch Räuchern des herzustellenden oder bereits teilweise hergestellten Nahrungsmittels ausgeführt werden.

19. Nahrungsmittel, erzielt durch den Einsatz des Verfahrens nach einem der Ansprüche 1 bis 18.

20. Konservierungsmittel für ein Nahrungsmittel zum Einsatz des Verfahrens nach einem der Ansprüche 3 oder 5 bis 18, **dadurch gekennzeichnet, dass** es aus einem Rauch besteht, der durch Pyrolyse mindestens eines organischen Stoffes bei einer Temperatur zwischen 150°C und 300°C, vorzugsweise zwischen 200°C und 280°C erzeugt wird, eventuell gefolgt von einem zusätzlichen Schritt der Reinigung des Rauchs, um dessen Gehalt an unerwünschten Verbindungen vom Typ der polyzyklischen aromatischen Kohlenwasserstoffe (PAK), der Phenolverbindungen und Analogem auf eine annehmbare Konzentration zu senken.

21. Konservierungsmittel für ein Nahrungsmittel zum Einsatz des Verfahrens nach einem der Ansprüche 4 oder 6 bis 18, **dadurch gekennzeichnet, dass** es aus einem Flüssigrauch besteht, der aus mittels Pyrolyse mindestens eines organischen Stoffes bei einer Temperatur zwischen 150°C und 300°C, vorzugsweise zwischen 200°C und 280°C erzeugtem Rauch erzeugt wird, wobei nach der Pyrolyse eventuell ein zusätzlicher Schritt zur Reinigung des erzeugten Rauchs erfolgt, um dessen Gehalt an unerwünschten Verbindungen vom Typ der polyzyklischen aromatischen Kohlenwasserstoffe (PAK), der Phenolverbindungen und Analogem auf eine annehmbare Konzentration zu senken, wobei der erzeugte, eventuell gereinigte Rauch nach der Herstellung in einer geeigneten Kondensierungsvorrichtung in der flüssigen Phase kondensiert wird.

22. Konservierungsmittel nach Anspruch 20 oder 21, **dadurch gekennzeichnet, dass** es einen Gehalt an aus der Pyrolyse hervorgegangenen Carboxylsäuren zwischen 1 Gew.% und 50 Gew.% aufweist.

23. Verwendung einer Zusammensetzung die mindestens eine carbonylierte Substanz enthält, und zwar eine andere als Hydroxyacetaldehyd und reduzierende Zucker, zur Färbung eines Nahrungsmittels durch Maillard-Reaktionen.

24. Verwendung nach Anspruch 32, **dadurch gekennzeichnet, dass** die Zusammensetzung mindestens eine Substanz enthält, die in der Gruppe gewählt wird, die aus Hexadecanal, Glutaraldehyd, 2-Ethylhexanal, Farnesal, 2-Butenal, 2-Methylhexanal, Glyoxal, 2-Methylpentanal, Neral, Tridecanal, 2-Hexanal und 2-Propenal gebildet wird.
